# EUROPÄISCHE PATENTANMELDUNG

(11) **EP 0 898 051 A1**
(43) Veröffentlichungstag der Anmeldung: **24.02.1999**
(21) Anmeldenummer: 98115436.2
(22) Anmeldetag: 17.08.1998
(51) Int. Cl.: E21C 25/52, E21D 9/10

(54) **Kombination konventioneller Schlitzwerkzeuge mit exzenteraktivierten Fräsbohrwerkzeugen**

(30) Priorität: 18.08.1997 CH 1975/97
(71) Anmelder: Bechem, Hannelore, D-58093 Hagen (DE)
(72) Erfinder: Bechem, Klaus, 58093 Hagen (DE); Bechem, Ulrich, 58093 Hagen (DE); Bechem, Philip, 58093 Hagen (DE)

(57) **Zusammenfassung**

Kombination konventioneller oder schlagüberlagerter Schlitzwerkzeuge zum Herstellen von Schlitzen und Fugen mit exzenterschlagüberlagerten gegengewuchteten flächig fräsenden Werkzeugen zum Abtragen von Böden, Wänden, Gestein, Mineralien und dgl.

## Beschreibung

Um in Böden und Wänden, Gesteinen, Mineralien und dgl. Schlitze oder Fugen herzustellen - z.B. um nachträglich Kabel oder Rohre zu verlegen - wird z.B. beim handgeführten Arbeiten üblicherweise zuerst mit zwei Diamantscheiben geschlitzt und dann der Steg herausgestemmt. Schlagüberlagerte Fräswerkzeuge dagegen sind kurvengängig und fräsen harte Materialien, d.h. sie sind unter normalen Bedingungen schneller und rationeller, aber nicht in allen Fällen beim handgeführten Arbeiten in allerhärtestem Beton.

Um entsprechende Nachteile zu eliminieren, werden erfindungsgemäß an einem Aggregat entweder Schlitzwerkzeuge, konventionelle respektive schlagüberlagerte, gegen exzenterschlagüberlagerte gegengewuchtete flächig fräsende Werkzeuge auswechselbar installiert und vorzugsweise mit jeweils optimalen Drehzahlen betrieben.

Um mit schwereren Aggregaten nicht nur Fingen sondern großflächiger und ggf. tiefer abzutragen, wird erfindungsgemäß z.B. mit mehreren Schlitzscheiben, konventionell oder aktiviert, - z.B. im Abstand von 100 - 300 mm angeordnet - z.B. 100 - 300 mm tief vorgeschlitzt, das Gestein, Mineral oder dgl. entspannt und anschließend schlagüberlagert in fast der gesamten Tiefe - vergleichsweise leicht, schnell und verschleißarm - flächig abgefräst.

Die exzenterschlagüberlagerte Frästechnik beruht auf dem EP 91105564.8-2313 sowie EP 88710058.4-2313 0329915.

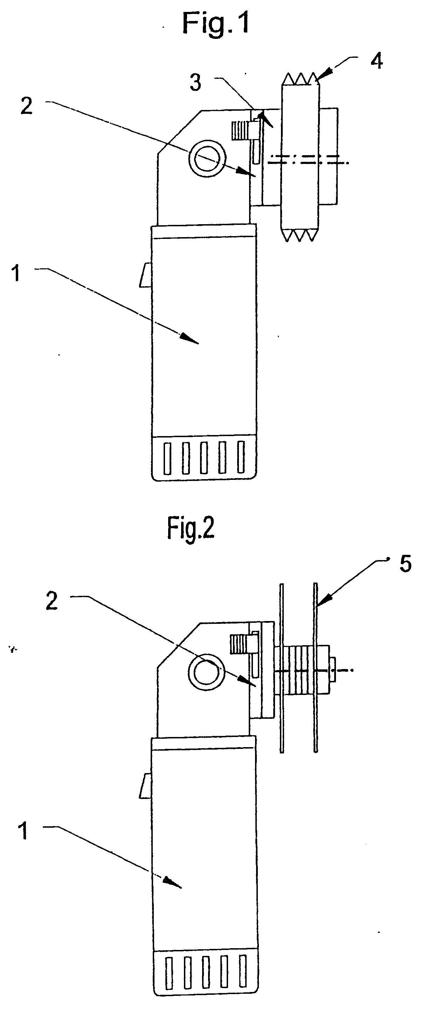

In der Figur 1, nur einem Ausführungsbeispiel mit Antrieb für zwei Systeme auf ein- und derselben Antriebswelle, hier als handgeführtes Gerät mit 1.500 bis 2.000 Watt elektrischer Leistung und Drehzahl z.B. zwischen 6 - 12.000 U/min, ist (1) der Antriebsmotor, (2) ein Schnellverschluß für die Auswechselbarkeit, (3) ist das Schlagübertagerungssystem auf der schnellaufend angetriebenen Exzenterwelle mit Gegengewicht und Untersetzungsgetriebe für ein nur langsam drehend angetriebenes schlagüberlagert flächig fräsendes Fräswerkzeug (4) oder ein einfach respektive zweifach schlitzendes Werkzeug (Fig. 2 u. 5).

In der Figur 2 ist (1) wieder der Antriebsmotor, (2) der Schnellverschluß zum Auswechseln des einen gegen das andere System. (5) sind hier zwei auf der Antriebswelle direkt angetriebene mit z.B. 6.000 bis 12.000 U/min laufende konventionell schlagüberlagert arbeitende Diamantscheiben - in etwa der Breite des Werkzeuges (4) in der Figur 1 - erfindungsgemäß zum Schlitzen, vorzugsweise zum anschließendem Herausfräsen des stehenbleibenden Steges mit dem schlagüberlagerten Werkzeug (gemäß Figur 1).

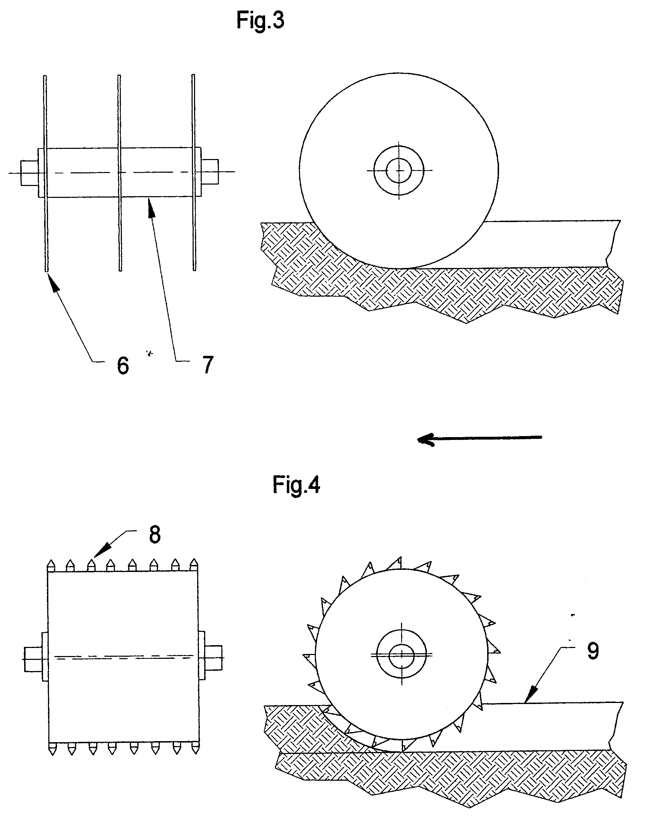

In der Figur 3 sind (6) beispielsweise mehrere vorschlitzende Scheiben, die über die Welle (7) langsam- resp. schnelldrehend angetrieben sind, d.h. schlagüberlagert oder konventionell arbeitend.

In der Figur 4 fräsen dann im 2-ten Arbeitsgang schlagüberlagerte Werkzeuge (8) die jeweils stehenbleibenden Stege (9) vergleichsweise leicht ab. Die Auswechselbarkeit der beiden verschiedenen Systeme an einer Maschine und/oder Welle kann - muß hierbei aber nicht gegeben sein; beansprucht wird das Verfahren.

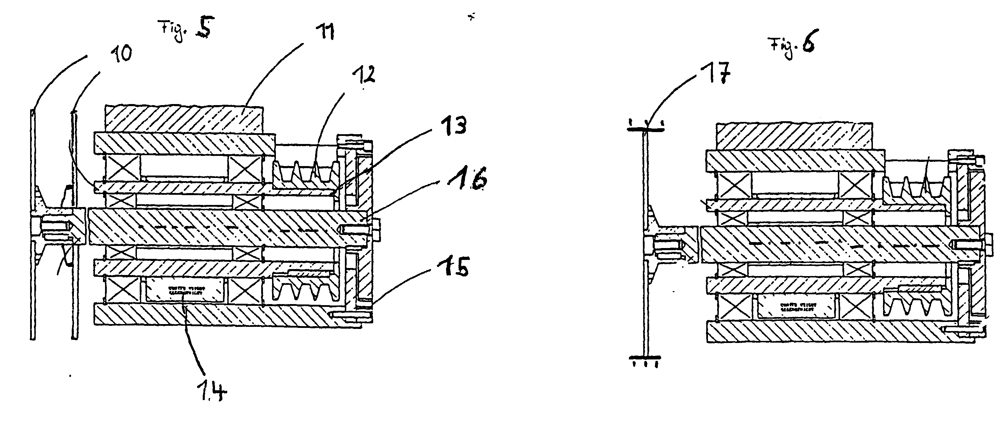

In der Figur 5 ist ein schlagüberlagertes Doppelschlitzwerkzeug (10) dargestellt, (11) ist der Halter dieser speziellen Aktivierungsbauart und (12) nur eine Antriebsart für die schnellaufend angetriebene Exzenterhülse (13) mit Gegengewicht (14). Mit (15) ist das Reduktionsgetriebe über ineinander ablaufende Innen- bzw. Außenzahnkränze zum Antreiben der dadurch langsam drehend schlagüberlagerten Welle (16) dargestellt; hier als Beispiel die Alternative mit einem gestellfest gehaltenen Innenzahnkranz.

Die Figur 6 entspricht Figur 5 - bis auf das ein- oder mehrfach schlitzende, respektive das dargestellte flächig fräsende schlagüberlagerte Werkzeug (17) anstelle des Werkzeuges (10) der Figur 5 - austauschbar montiert.

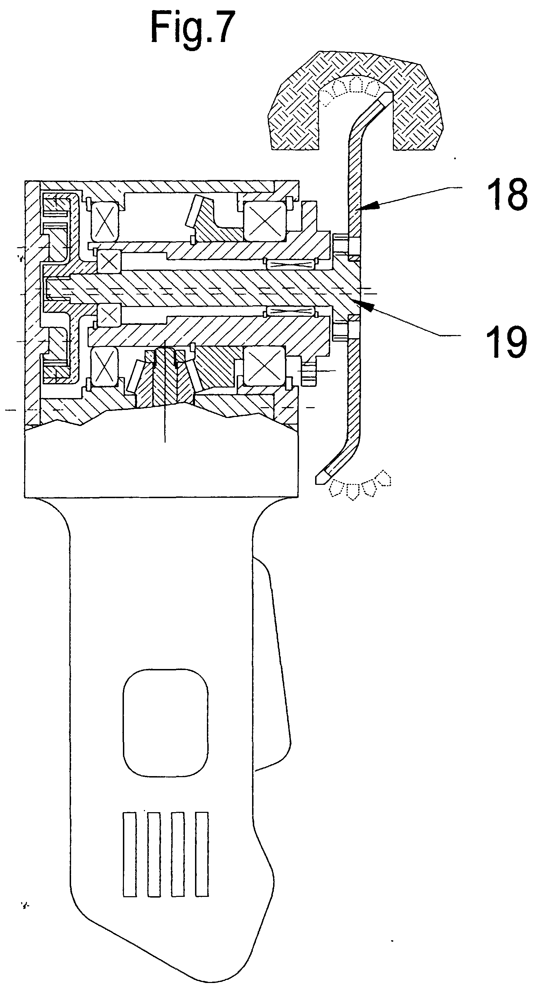

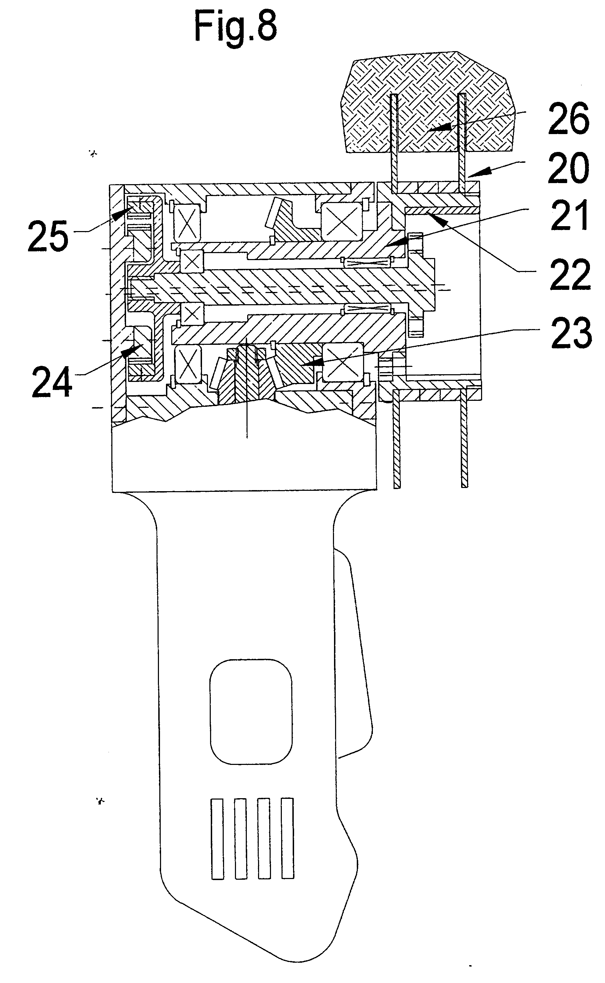

In der Figur 7 und 8, einer besonderen beanspruchten Bauart, ist in der Figur 7 ein die Fuge von z.B. 30 mm Breite voll herausarbeitendes aktiviertes Fräswerkzeug (18). Die Technik entspricht im wesentlichen der der Figur 5 und 6, nur die Ankopplung und Auswuchtung der verschieden arbeitenden Werkzeuge ist unterschiedlich. Hier in der Figur 7 ist (18) das voll herausarbeitende Werkzeug, das an die vergleichsweise langsam drehend angetriebene radial schlagend arbeitende Welle (19) auswechselbar montiert wird.

In der Figur 8 ist (20) ein z.B. zweifaches konventionell ohne Schlagüberlagerung schnelldrehend angetriebenes schlitzendes Werkzeug, das hier an die schnellaufende Exzenterwelle (21) auswechselbar montiert in (22) ist das auf das innere Gewicht (23) der Exzenterwelle (21) abgestimmte Gegengewicht zur Auswuchtung. Gesonderter Schutz wird für das Verfahren beansprucht, mit dem System nach Figur 8 zweifach konventionell vorzuschlitzen und anschließend mit dem System nach Figur 7 den stehenbleibenden Steg (26) schlagüberlagert herauszufräsen. Bei der Bauart entsprechend Figur 7 und 8 ist (24) der gehaltene Außenzehnkranz, um den der Innenzahnkranz (25) drehzahlreduzierend exzentrisch abläuft. Dieses bevorzugte optimierte System entspricht Anspruch 9.

## Patentansprüche

1. Verfahren zur Herstellung von Schlitzen, Fingen und dgl. sowie zum flächigen Abtragen von Böden, Wänden, Mineralien und dgl., gekennzeichnet durch die Auswechselbarkeit schlitzender Scheiben gegen exzenterschlagüberlagerte gegengewuchtete langsam drehende flächig fräsende Werkzeuge an einem Aggregat.

2. Verfahren zur Herstellung von Schlitzen, Fugen und dgl. sowie zum flächigen Abtragen von Böden, Wänden, Mineralien und dgl., nach Anspruch 1 gekennzeichnet durch Auswechselbarkeit ein- oder mehrfach schlitzender Scheiben gegen exzenterschlagüberlagerte gegengewuchtete flächig fräsende Werkzeuge auf/an ein- und demselben Aggregat.

3. Verfahren zur Herstellung von Schlitzen, Fugen und dgl. sowie zum flächigen Abtragen von Böden, Wänden, Mineralien und dgl., nach Anspruch 1 und 2 dadurch gekennzeichnet, daß erst ein- oder mehrfach vorgeschlitzt und danach rechts und links resp. der jeweils stehengebliebene Steg exzenterschlagüberlagert flächig abgefräst wird.

4. Verfahren zur Herstellung von Schlitzen, Fugen und dgl. sowie zum flächigen Abtragen von Böden, Wänden, Mineralien und dgl. nach Anspruch 1 bis 3, dadurch gekennzeichnet, daß handgeführt zuerst mit zwei im Abstand voneinander angeordneten angetriebenen Scheiben vorzuschlitzen und danach im 2. Arbeitsgang den stehenbleibenden erhabenen Steg exzenterschlagüberlagert herauszufräsen (Figur 1 bis 8, 26).

5. Verfahren zur Herstellung von Schlitzen, Fugen und dgl. sowie zum flächigen Abtragen von Böden, Wänden, Mineralien und dgl., nach Anspruch 1 bis 4 dadurch gekennzeichnet, daß bei der exzenterschlagüberlagerten Technik das Werkzeug / die Werkzeuge in ihrem Gewicht auf das Gegengewicht an der Exzenterwelle abgestimmt ausgewuchtet werden.

6. Verfahren zur Herstellung von Schlitzen, Fugen und dgl. sowie zum flächigen Abtragen von Böden, Wänden, Mineralien und dgl., nach Anspruch 1 bis 5, gekennzeichnet durch dynamische Auswuchtung über Massenausgleich.

7. Verfahren zur Herstellung von Schlitzen, Fugen und dgl. sowie zum flächigen Abtragen von Böden, Wänden, Mineralien und dgl. nach Anspruch 1 bis 6, dadurch gekennzeichnet, daß das oder die Schlitzwerkzeuge an der schnellaufend angetriebenen Exzenterwelle (21) installiert werden oder alternativ aktivierte Fräswerkzeuge an der langsam drehenden schlagüberlagernden Mittelwelle (19) auswechselbar angeflanscht werden (Figur 7 und 8). Ein Schlitzwerkzeug (20) kann aber auch schlagend an der Welle (19) installiert werden.

8. Verfahren zur Herstellung von Schlitzen, Fugen und dgl. sowie zum flächigen Abtragen von Böden, Wänden, Mineralien und dgl. nach Anspruch 7 dadurch gekennzeichnet, daß ein- oder zweifach schlitzende, an der Exzenterwelle (21) schnellaufend angetriebene konventionell rotierende Schlitzscheiben zur Auswuchtung mit Gewichten (22) versehen werden (Figur 8).

9. Verfahren zur Herstellung von Schlitzen, Fugen und dgl. sowie zum flächigen Abtragen von Böden, Wänden, Mineralien und dgl. nach Anspruch 1 bis 8, gekennzeichnet durch die Verwendung von exzentrisch ineinander ablaufenden Zahnkränzen, bei denen das Zahnrad mit Außenverzahnung gehalten wird, um den das Zahnrad mit Innenverzahnung drehzahlreduzierend kreist oder umgekehrt (Figur 1 bis 8).

10. Verfahren zur Herstellung von Schlitzen, Fugen und dgl. sowie zum flächigen Abtragen von Böden, Wänden, Mineralien und dgl. nach Anspruch 1 bis 9 dadurch gekennzeichnet, daß das jeweilige Aggregat durch sein Gewicht oder eine massive mechanische Führung stabilisiert arbeitet (u.a. Figur 3 und 4).
